# EUROPÄISCHE PATENTSCHRIFT

(11) **EP 4 437 256 B1**
(45) Veröffentlichungstag und Bekanntmachung des Hinweises auf die Patenterteilung: **26.08.2026**
(21) Anmeldenummer: 22821440.9
(22) Anmeldetag: 22.11.2022
(51) Int. Cl.: F16K 7/12, F16K 27/02

(54) **VERBINDUNGSVORRICHTUNG UND MEMBRANVENTIL**
CONNECTION DEVICE AND DIAPHRAGM VALVE
DISPOSITIF DE RACCORDEMENT ET SOUPAPE À DIAPHRAGME

(30) Priorität: 25.11.2021 DE 102021130951
(43) Veröffentlichungstag der Anmeldung: 02.10.2024
(73) Patentinhaber: GEMÜ Gebr. Müller Apparatebau GmbH & Co. Kommanditgesellschaft, 74635 Kupferzell (DE)
(72) Erfinder: MAGEJ, Johann, 74523 Schwäbisch Hall (DE); RUPP, Martin, 74673 Mulfingen (DE)
(74) Vertreter: DREISS Patentanwälte PartG mbB
(86) Internationale Anmeldenummer: PCT/EP2022/082714
(87) Internationale Veröffentlichungsnummer: WO 2023/094346

(56) Entgegenhaltungen:
- EP-A1- 2 952 790
- CN-A- 113 646 562
- US-A- 4 928 919
- US-A1- 2015 053 875

## Beschreibung

Die Erfindung betrifft ein Membranventil und ein Membransitzventil.

Es werden Fortschritte im Bereich Prozessventiltechnik beschrieben.

US 2015/053875 A1 offenbart ein Verschlusselement für ein Absperrorgan für Fluide sowie das Absperrorgan. Das Verschlusselement umfasst eine Membran und ein von der Membran abragendes Verriegelungsglied. Das Verriegelungsglied weist einen Außendurchmesserrücksprung auf, der derart ausgestaltet ist, so dass das Verschlusselement mittels des Außendurchmesserrücksprungs im Wesentlichen orthogonal zu einer Zustellachse zuführbarer Verriegelungsschieber verriegelbar ist.

EP 2 952 790 A1 offenbart ein Zwischenstück für ein Membranventil für Fluide. Ein Druckstück ist in dem Zwischenstück anordenbar. Das Druckstück weist wenigstens zwei Verriegelungsschieber zu einem Verriegeln eines Verriegelungsglieds eines Verschlusselements auf. Das Zwischenstück weist einen Zylinder auf, in dem das Druckstück axial führbar ist. Das Zwischenstück weist eine Ausnehmung auf, die derart angeordnet ist, dass in einer Montageposition des Druckstücks sich die Verriegelungsschieber in die Ausnehmung verlagern und damit das Verriegelungsglied freigeben.

Die der Erfindung zugrunde liegende Aufgabe wird durch ein Membranventil oder Membransitzventil gemäß dem Anspruch 1 gelöst.

Ein Aspekt der Beschreibung betrifft den folgenden Gegenstand: Eine Verbindungsvorrichtung für ein Membranventil oder Membransitzventil umfassend eine Aufnahme mit einer distalen Öffnung, welche einen Aufnahmeraum zur Aufnahme eines Abschnitts eines Membranstifts einer Ventilmembran freigibt, wobei wenigstens ein lateral angeordneter Durchgang der Aufnahme in den Aufnahmeraum führt; wenigstens ein erstes, in dem wenigstens einen lateralen Durchgang zumindest lotrecht zu einer Längsachse der Verbindungsvorrichtung beweglich angeordnetes Sicherungselement; und wenigstens ein zweites Sicherungselement, das an der Aufnahme entlang der Längsachse beweglich gelagert ist, wobei das zweite Sicherungselement in einer ersten Stellung relativ zur Aufnahme das wenigstens eine erste Sicherungselement durch eine innere Öffnung des wenigstens einen Durchgangs in den Aufnahmeraum drückt, und wobei das zweite Sicherungselement in einer zweiten Stellung relativ zur Aufnahme das erste Sicherungselement zur Bewegung aus dem Aufnahmeraum heraus freigibt.

Vorteilhaft kann durch das zweite zur Aufnahme bewegliche Sicherungselement und den Eingriff des ersten Sicherungselements in den Aufnahmeraum eine Kraft in den Membranstift eingeleitet werden. Vorteilhaft ist für die Verbindungsvorrichtung ein nur geringer Bauraum vonnöten, was die Konstruktionsfreiheitsgrade für andere Bauteile vergrößert. Eine Montage und Demontage der Membran wird beschleunigt.

Erfindungsgemäß stützt sich ein Federelement an der Aufnahme ab und drückt das zweite Sicherungselement in Richtung der ersten Stellung.

Damit drängt das zweite Sicherungselement stets in die zweite Stellung, in welcher das wenigstens eine erste Sicherungselement die Membran bzw. deren Pin/Membranstift in dem Aufnahmeraum festlegt.

Ein vorteilhaftes Beispiel zeichnet sich dadurch aus, dass der wenigstens eine Durchgang sich in Richtung der inneren Öffnung zumindest abschnittsweise verjüngt.

Vorteilhaft wird durch die Verjüngung das erste Sicherungselement in dem Durchgang gehalten.

Ein vorteilhaftes Beispiel zeichnet sich dadurch aus, dass das zweite Sicherungselement einen Begrenzungsraum umfasst, welcher in einem ersten Abschnitt einen ersten Durchmesser aufweist, um in der ersten Stellung das erste Sicherungselement durch die innere Öffnung des wenigstens einen Durchgangs in den Aufnahmeraum zu drücken, wobei ein zweiter Abschnitt des Begrenzungsraums einen zweiten Durchmesser aufweist, welcher größer ist als der erste Durchmesser, um in der zweiten Stellung das erste Sicherungselement zur Bewegung aus dem Aufnahmeraum heraus freizugeben.

Durch die unterschiedlichen Durchmesser wird erreicht, dass unterschiedliche relative Drehpositionen des zweiten Sicherungselements und der Aufnahme keinen Einfluss auf die Funktion der Verbindungsvorrichtung haben.

Ein vorteilhaftes Beispiel zeichnet sich dadurch aus, dass das zweite Sicherungselement eine Haltegeometrie zum Erreichen der zweiten Stellung umfasst.

Vorteilhaft kann dadurch eine separate Betätigung des zweiten Sicherungselements entfallen. So kann der Antrieb dazu genutzt werden, die Verbindungsvorrichtung in eine Montageposition zu fahren, in der die Haltegeometrie festgehalten wird.

Ein vorteilhaftes Beispiel zeichnet sich dadurch aus, dass in dem Aufnahmeraum wenigstens ein Schutz gegen ein Herausfallen des Membranstifts vorhanden ist. Vorteilhaft ermöglicht der Schutz eine haptische Rückmeldung an den Monteur. Vorteilhaft wird hiermit die korrekte Montage bestätigt.

Ein weiterer Aspekt der Beschreibung betrifft den folgenden Gegenstand: Ein Membranventil oder Membransitzventil umfassend einen Antrieb; eine mit dem Antrieb verbundene Antriebsstange, welche die Verbindungsvorrichtung gemäß dem vorigen Aspekt umfasst; einen antriebsseitigen Körper; einen Ventilkörper; die Membran, wobei ein lateraler Abschnitt der Membran zwischen dem Ventilkörper und dem antriebsseitigen Körper verspannt ist, wobei das zweite Sicherungselement in seiner ersten Stellung relativ zur Aufnahme das erste Sicherungselement durch die innere Öffnung des mindestens einen Durchgangs in eine Verjüngung des Membranstifts, welcher sich zumindest abschnittsweise in dem Aufnahmeraum befindet, drückt.

Die Sicherungselemente koppeln den Membranstift und damit die Membran mit der Antriebsstange, wenn sich das zweite Sicherungselement in der ersten Stellung befindet. Wird das zweite Sicherungselement in die zweite Stellung überführt, so kann die Membran von der Antriebsstange entfernt werden bzw. eine neue Membran kann schneller montiert werden.

Die Verjüngung ist eine Querschnittverjüngung lotrecht zur Stellachse und ermöglicht es, dass selbst bei der Festlegung des Membranstifts in der Aufnahme ein rotatorischer Freiheitsgrad verbleibt. So kann die Membran nach Einbringen des Membranstifts in den Aufnahmeraum noch gedreht werden. So lässt sich über eine Kodierung eine Soll-Drehposition der Membran zu einer feststehenden Komponente des Membranventils einfacher realisieren. Außerdem kann der Membranstift zumindest im Bereich des Aufnahmeraums rotationssymmetrisch zur Stellachse ausgebildet sein.

Ein vorteilhaftes Beispiel zeichnet sich dadurch aus, dass einen Kompressor, welcher zwischen dem distalen Ende der Aufnahme und der Membran angeordnet ist, vorgesehen ist.

Der entlang der Stellachse frei bewegliche Kompressor wird von dem distalen Ende der Aufnahme mit einer Kraft beaufschlagt, um das Membranventil bzw. den Fluidkanal zu schließen.

Ein vorteilhaftes Beispiel zeichnet sich dadurch aus, dass ein freier Abstand zwischen dem Kompressor, der Membran und dem distalen Ende der Aufnahme kleiner ist als ein Abstand zwischen einem Boden des Aufnahmeraums und einem distalen Ende des Membranstifts.

Vorteilhaft kann dadurch eine Schließkraft über das distale Ende der Aufnahme in den Kompressor und vom Kompressor in die Membran eingeleitet werden, welche auf den Ventilsitz drückt. Die Schließkraft wird beim Schließen nicht über die Sicherungselemente übertragen. Gleichwohl wird eine Öffnungskraft, die die Membran vom Ventilsitz wegbewegt, über das erste Sicherungselement auf den Membranstift und die Membran übertragen.

Ein vorteilhaftes Beispiel zeichnet sich dadurch aus, dass der Membranstift innerhalb des Aufnahmeraums beweglich entlang der Stellachse gelagert ist.

Vorteilhaft wirkt sich dies so aus, dass bei der Montage und Demontage sich das erste Sicherungselement definiert in die Durchmesserverjüngung des Membranstifts einbringen und entfernen lässt.

Ein vorteilhaftes Beispiel zeichnet sich dadurch aus, dass der Antrieb die Antriebsstange aus wenigstens einer Betriebsposition in eine Montageposition überführt, in welcher sich das zweite Sicherungselement in der zweiten Stellung befindet.

Vorteilhaft lässt sich über die Position der Antriebsstange der Membranstift zur Aufnahme festlegen oder freigeben.

Ein vorteilhaftes Beispiel zeichnet sich dadurch aus, dass die Haltegeometrie des zweiten Sicherungselements beim Übergang der Antriebsstange in die Montageposition auf einen zur Antriebsstange feststehenden Anschlag trifft.

Damit wird das zweite Sicherungselement festgehalten, wohingegen sich die Antriebsstange mit der Aufnahme weiter in die Montageposition bewegt und das zweite Sicherungselement über das erste Sicherungselement den Aufnahmeraum zum Einbringen bzw. Entfernen des Membranstiftes freigibt. Zur Montage mit dem Ventilkörper wird die Antriebsstange mittels des Antriebs wieder zurückgezogen.

In der Zeichnung zeigen:
- Figur 1: eine perspektivische Ansicht einer Verbindungsvorrichtung;
- Figur 2: ein Membranventil in einem schematischen Schnitt;
- Figuren 3 und 4: unterschiedliche Betriebspositionen der Antriebsstange;
- Figur 5: eine Montageposition der Antriebsstange.

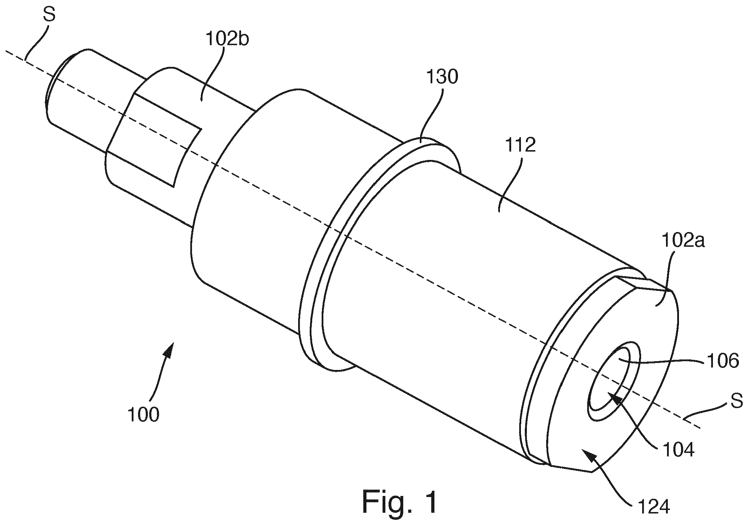

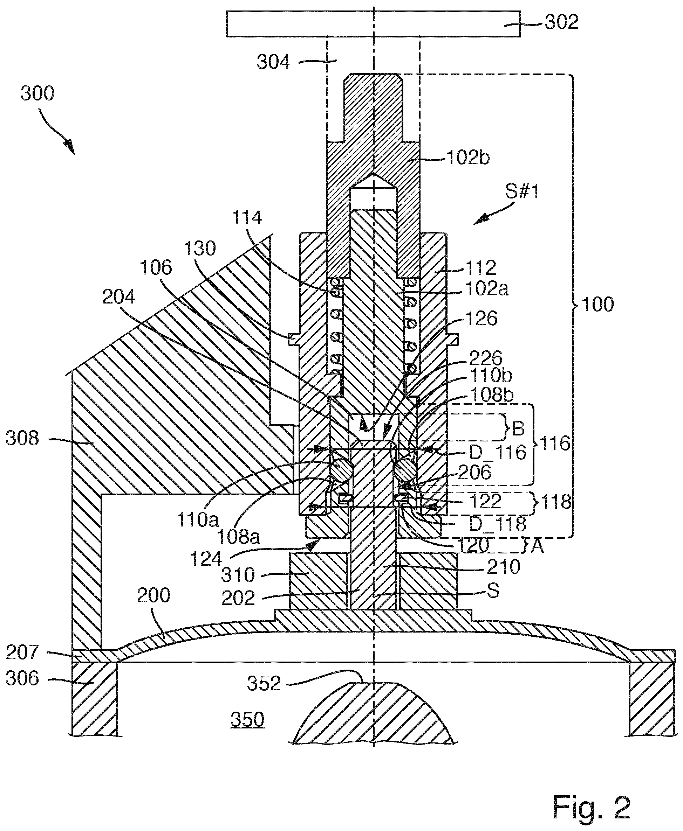

Figuren 1 und 2 zeigen eine Verbindungsvorrichtung 100. In Figur 2 ist ein Membranventil 300, engl. diaphragm valve, das die Verbindungsvorrichtung 100 umfasst, in einem schematischen Schnitt gezeigt. Alternativ zu dem gezeigten Beispiel kann die Verbindungsvorrichtung 100 auch für andere Ventilarten, beispielsweise für ein Membransitzventil (Plug-Diaphragm Valve), bei dem das Absperrmittel in einem äußeren Bereich membranartig ausgebildet ist und in einen inneren starren Absperrabschnitt übergeht, verwendet werden.

Eine Aufnahme 102a-b der Verbindungsvorrichtung 100 umfasst eine distalen Öffnung 104, welche einen Aufnahmeraum 106 zur Aufnahme eines Abschnitts eines Membranstifts 202 einer Ventilmembran 200, engl. valve diaphragm, freigibt, wobei wenigstens ein lateral angeordneter Durchgang 108a-b der Aufnahme 102a-b in den Aufnahmeraum 106 führt. Die Aufnahme 102a ist in Form einer Buchse ausgebildet, welche den Membranstift 202 aufnimmt.

Ein erstes Sicherungselement 102a-b ist in dem lateralen Durchgang 108a-b zumindest lotrecht zu einer Mittenlängsachse bzw. Längsachse der Verbindungsvorrichtung 100 beweglich gelagert. Die Längsachse der Verbindungsvorrichtung 100 fällt in eingebautem Zustand mit der Stellachse S des zugeordneten Membranventils 300 zusammen.

Ein zweites Sicherungselement 112 ist an der Aufnahme 102ab entlang der Längsachse beweglich gelagert. Das zweite Sicherungselement 112 drückt in einer ersten Stellung S#1 relativ zur Aufnahme 102a-b das wenigstens eine erste Sicherungselement 110a-b durch eine innere Öffnung des wenigstens einen Durchgangs 108a-b abschnittsweise in den Aufnahmeraum 106. Hierzu ist das erste Sicherungselement 102a-b größer dimensioniert als die Wandung, in welcher sich der Durchgang 108a-b befindet. Der wenigstens eine Durchgang 108a-b verjüngt sich in Richtung der inneren Öffnung zumindest abschnittsweise, insbesondere kegelschnittförmig.

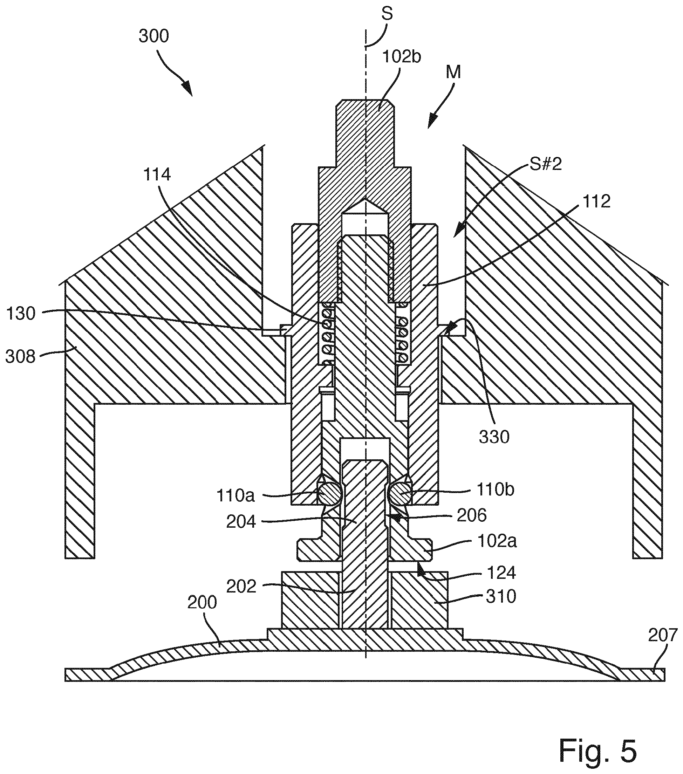

Das zweite Sicherungselement 112 gibt in einer zweiten in Figur 5 sichtbaren Stellung S#2 relativ zur Aufnahme 102a-b das erste Sicherungselement 110a-b zur Bewegung aus dem Aufnahmeraum 106 heraus frei. Das bedeutet, dass sich das erste Sicherungselement 110a-b in einen durch das zweite Sicherungselement 112 freigegebenen Raum hineinbewegen kann.

Ein als Druckfeder ausgebildetes Federelement 114 stützt sich an der Aufnahme 102a-b ab und drückt das zweite Sicherungselement 112 in Richtung der ersten Stellung S#1. In der ersten Stellung S#1 liegt das zweite Sicherungselement 112 an der Aufnahme 102a-b an.

Ein Membranventil 300 umfasst einen Antrieb 302 und eine mit dem Antrieb 302 verbundene Antriebsstange 304, welche die Verbindungsvorrichtung 100 umfasst. Die Verbindungsvorrichtung 100 ist am distalen Ende der Antriebsstange 304 angeordnet. Vorliegend ist die Verbindungsvorrichtung 100 mit einer zweiteiligen Aufnahme 102a und 102b ausgeführt. Selbstverständlich kann die Aufnahme auch anders ausgeführt sein.

In dem gezeigten Beispiel ist die Aufnahme 102b als von der Antriebsstange 304 separates Teil ausgeführt. In einem nicht gezeigten Beispiel ist die die Aufnahme 102b Teil der Antriebsstange 304.

Das Membranventil zeigt aus Übersichtlichkeitsgründen in Figur 2 nur linkerhand eingezeichnet: Einen zum Antrieb 302 feststehend angeordneten antriebsseitigen Körper 308, beispielsweise ein Antriebsgehäuse und einen Ventilkörper 306. Der Ventilkörper 306 umfasst einen Fluidkanal 350, der durch Aufdrücken der Membran 200 auf einen Ventilsitz 352 verschließbar ist. Ein lateraler Abschnitt 207 der Membran 200 ist zwischen dem Ventilkörper 306 und dem antriebsseitigen Körper 308 verspannt. Das zweite Sicherungselement 112 drückt in seiner ersten Stellung S#1 relativ zur Aufnahme 102a-b das erste Sicherungselement 110a-b durch die innere Öffnung des mindestens einen Durchgangs 108a-b abschnittsweise in eine Verjüngung 206 des Membranstifts 202, die beispielsweise als äußere Umfangsnut ausgebildet ist. Der Membranstift 202 befindet sich hierbei zumindest abschnittsweise in dem Aufnahmeraum 106.

Die ersten Sicherungselemente 110a-b dringen also in die Verjüngung 206 ein, welche sich proximal an den Kopf 204 des von der Membran 200 abragenden Membranstifts 202 anschließt.

Ein Kompressor 310 bzw. ein Druckstück ist zwischen dem distalen Ende 124 der Aufnahme 102a-b und der Membran 200 angeordnet.

Das zweite Sicherungselement 112 ist als Überwurfhülse ausgebildet. Das zweite Sicherungselement 112 umfasst antriebsseitig einen Aufnahmeraum für das Federelement 114. Das zweite Sicherungselement 112 umfasst membranseitig einen Begrenzungsraum, welcher in einem ersten von der Membran 200 wegweisend angeordneten Abschnitt 216 einen ersten Durchmesser D_116 aufweist, um in der ersten Stellung S#1 das erste Sicherungselement 110a-b durch die innere Öffnung des wenigstens einen Durchgangs 108a-b abschnittsweise in den Aufnahmeraum 106 zu drücken. Ein zweiter in Richtung Membran 200 angeordneter Abschnitt 118 des Begrenzungsraums weist einen zweiten Durchmesser D_118 auf, welcher größer ist als der erste Durchmesser D_116, um in der zweiten Stellung S#2 das erste Sicherungselement 110a-b zur Bewegung aus dem Aufnahmeraum 106 heraus freizugeben.

Das zweite Sicherungselement 112 umfasst eine lateral angeordnete Haltegeometrie 130 zum Erreichen der in Figur 5 gezeigten zweiten Stellung S#2.

In dem Aufnahmeraum 106 ist wenigstens ein Schutz gegen ein Herausfallen des Membranstifts 202. Beispielsweise umfasst dieser Schutz gegen Herausfallen eine in einer Lotebene der Stellachse S verlaufende Innennut 120 und einen darin angeordneten elastischen O-Ring 122, der einen kleineren Durchmesser als ein Kopf 204 des Membranstifts 202 aufweist. Beim Eindrücken des Membranstifts 202 in den Aufnahmeraum 106 spürt der Monteur also zunächst einen mechanischen Widerstand, der von dem Auftreffen des Kopfes 204 auf den elastischen O-Ring 122 herrührt. Wird der Membranstift 202 weiter in den Aufnahmeraum 106 eingedrückt, so verringert sich der mechanische Widerstand, sobald der O-Ring 122 in die Verjüngung 206 des Membranstifts 202 eingreift. Damit wird eine Verliersicherung realisiert.

Alternativ oder zusätzlich kann eine Verliersicherung auch anders realisiert werden. Beispielsweise ist ein Magnet an einem Boden 126 des Aufnahmeraums 106 angeordnet. Der Kopf 204 des Membranstifts 104 ist magnetisch ausgeführt und wird somit über die magnetische Haltkraft während der Montage verliersicher gehalten.

Ein freier Abstand A entlang oder parallel zur Stellachse S zwischen dem Kompressor 310, der Membran 200 und dem distalen Ende 124 der Aufnahme 102a-b ist kleiner als ein Abstand B entlang oder parallel zur Stellachse S zwischen dem Boden 126 des Aufnahmeraums 106 und einem distalen Ende 226 des Membranstifts 202.

Der Membranstift 202 ist innerhalb des Aufnahmeraums 106 beweglich entlang der Stellachse S gelagert. Der Kopf 204 und ein Schaft 210 des Membranstifts 202 sind durch die Verjüngung 206 voneinander getrennt, wobei ein zur Stellachse S lotrechter erster Durchmesser des Kopfes 204 des Membranstifts 202 und ein zur Stellachse S lotrechter Durchmesser des Schafts 210 derart auf den zugeordneten Innendurchmesser des Aufnahmeraums 106 abgestimmt sind, dass der Membranstift 202 innerhalb des Aufnahmeraums 106 entlang der Stellachse S beweglich gelagert ist. Insbesondere folgt die innere Wandung des Aufnahmeraums 106 einer Zylindermantelinnenfläche und die äußeren Wandungen des Kopfs 204 und des Schafts 210 folgen einer Zylindermantelaußenfläche. Insbesondere sind der erste Durchmesser des Kopfes 204 und der zweite Durchmesser des Schaftes 210 gleich groß. In einem alternativen Beispiel ist der erste Durchmesser des Kopfes 204 kleiner als der zweite Durchmesser des Schaftes 210. In einem alternativen Beispiel ist der erste Durchmesser des Kopfes 204 größer als der zweite Durchmesser des Schaftes 210. Die Verjüngung 206 ist also Teil einer Umfangsnut des Membranstiftes 202. Die Umfangsnut ist parallel zur Stellachse S größer als der freie Abstand A, insbesondere größer als der maximale Abstand B, wenn sich das zweite Sicherungselement 112 in der ersten Stellung S#1 befindet.

Die Verjüngung 206 ist parallel zur Stellachse S derart dimensioniert, dass sie ein axiales Spiel des Membranstiftes 202 erlaubt. Gleichzeitig erlaubt die Konstruktion ein rotatorisches Spiel.

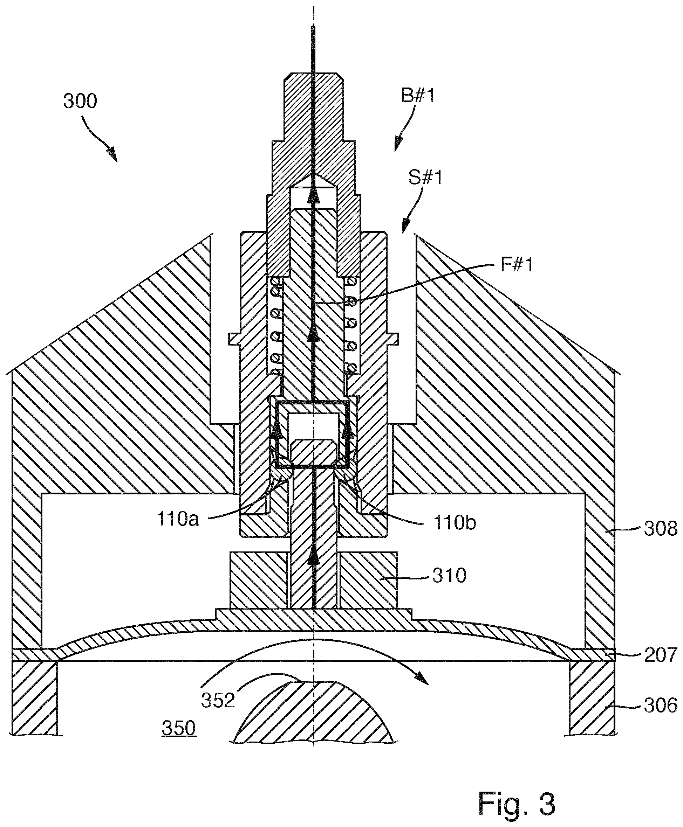

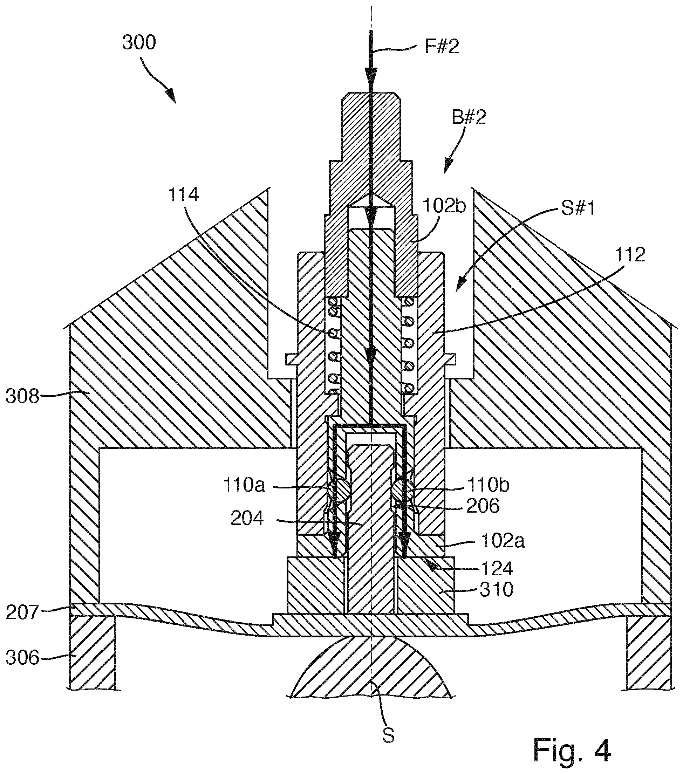

Figuren 3 und 4 zeigen in einem jeweiligen schematischen Schnitt verschiedene Betriebspositionen B#1 und B#2 der Antriebsstange. In Figur 3 wird die Membran 200 vom Ventilsitz 352 abgehoben, wobei ein Kraftfluss F#1 über die ersten Sicherungselemente 110a-b und den Membranstift 202 führt. In Figur 4 hingegen sind die Sicherungselemente 110a-b zwar in der Verjüngung 206 angeordnet. Ein Kraftfluss F#2 beim Drücken der Membran 200 auf den Sitz findet jedoch nicht über die ersten Sicherungselemente 110a-b statt. Vielmehr drückt das distale Ende 124 der Aufnahme 102a auf den Kompressor 310, der die eingeleitete Kraft an die Membran 200 weitergibt.

Figur 5 zeigt in einem schematischen Schnitt das Membranventil 300 ohne den Ventilkörper. Der Antrieb 302 bewegt die Antriebsstange 304 aus wenigstens einer der Betriebspositionen, in welcher ein Fluidkanal geöffnet oder geschlossen ist, in eine Montageposition M**,** in welcher sich das zweite Sicherungselement 112 in der zweiten Stellung S#2 befindet. Die Haltegeometrie 130 des zweiten Sicherungselements 112 trifft beim Übergang der Antriebsstange 304 in die Montageposition M auf einen zur Antriebsstange 304 feststehenden Anschlag 330, womit das zweite Sicherungselement 112 ab dem Auftreffen auf den Anschlag 330 zum Antrieb feststeht. In der gezeigten Montageposition M der Antriebsstange ist das Federelement 114 zusammengedrückt und erlaubt den ersten Sicherungselementen 110a-b sich aus der Verjüngung 206 heraus in einen äußeren Raum einzutreten. Damit kann der Membranstift 202 aus dem Aufnahmeraum 106 entfernt werden bzw. ein anderer Membranstift einer anderen Membran in den Aufnahmeraum 106 eingeführt werden.

## Patentansprüche

1. Ein Membranventil (300) oder ein Membransitzventil umfassend:
einen Antrieb (302);
eine mit dem Antrieb (302) verbundene Antriebsstange (304), welche eine Verbindungsvorrichtung (100) umfasst;
die Verbindungsvorrichtung (100) umfassend:
eine Aufnahme (102a-b) mit einer distalen Öffnung (104), welche einen Aufnahmeraum (106) zur Aufnahme eines Abschnitts eines Membranstifts (202) einer Ventilmembran (200) freigibt, wobei wenigstens ein lateral angeordneter Durchgang (108a-b) der Aufnahme (102a-b) in den Aufnahmeraum (106) führt;
wenigstens ein erstes, in dem wenigstens einen lateralen Durchgang (108a-b) zumindest lotrecht zu einer Längsachse der Verbindungsvorrichtung (100) beweglich angeordnetes Sicherungselement (110a-b);
wenigstens ein zweites Sicherungselement (112), das an der Aufnahme (102a-b) entlang der Längsachse beweglich gelagert ist, wobei das zweite Sicherungselement (112) in einer ersten Stellung (S#1) relativ zur Aufnahme (102a-b) das wenigstens eine erste Sicherungselement (110a-b) durch eine innere Öffnung des wenigstens einen Durchgangs (108a-b) in den Aufnahmeraum (106) drückt, und wobei das zweite Sicherungselement (112) in einer zweiten Stellung (S#2) relativ zur Aufnahme (102a-b) das erste Sicherungselement (110a-b) zur Bewegung aus dem Aufnahmeraum (106) heraus freigibt; und
ein Federelement (114), welches sich an der Aufnahme (102a-b) abstützt und das zweite Sicherungselement (112) in Richtung der ersten Stellung (S#1) drückt;
wobei der Antrieb (302) die Antriebsstange (304) aus wenigstens einer Betriebsposition (B#1, B#2) in eine Montageposition (M) überführt, in welcher sich das zweite Sicherungselement (112) in der zweiten Stellung (S#2) befindet.

2. Das Membranventil (300) oder Membransitzventil gemäß Anspruch 1, wobei der wenigstens eine Durchgang (108a-b) sich in Richtung der inneren Öffnung zumindest abschnittsweise verjüngt.

3. Das Membranventil (300) oder Membransitzventil gemäß einem der vorigen Ansprüche, wobei das zweite Sicherungselement (112) einen Begrenzungsraum umfasst, welcher in einem ersten Abschnitt (216) einen ersten Durchmesser (D_216) aufweist, um in der ersten Stellung (S#1) das erste Sicherungselement (110a-b) durch die innere Öffnung des wenigstens einen Durchgangs (108ab)in den Aufnahmeraum (106) zu drücken, und wobei ein zweiter Abschnitt (118) des Begrenzungsraums einen zweiten Durchmesser (D_118) aufweist, welcher größer ist als der erste Durchmesser (D_116), um in der zweiten Stellung (S#2) das erste Sicherungselement (110a-b) zur Bewegung aus dem Aufnahmeraum (106) heraus freizugeben.

4. Das Membranventil (300) oder Membransitzventil gemäß einem der vorigen Ansprüche, wobei das zweite Sicherungselement (112) eine Haltegeometrie (130) zum Erreichen der zweiten Stellung (S#2) umfasst.

5. Das Membranventil (300) oder Membransitzventil gemäß einem der vorigen Ansprüche, wobei in dem Aufnahmeraum (106) wenigstens ein Schutz gegen ein Herausfallen des Membranstifts (202) ist.

6. Das Membranventil (300) oder Membransitzventil gemäß einem der vorigen Ansprüche umfassend:
den Antrieb (302);
die mit dem Antrieb (302) verbundene Antriebsstange (304), welche die Verbindungsvorrichtung (100) umfasst;
einen antriebsseitigen Körper (308);
einen Ventilkörper (306);
die Membran (200), wobei ein lateraler Abschnitt (207) der Membran (200) zwischen dem Ventilkörper (306) und dem antriebsseitigen Körper (308) verspannt ist, wobei das zweite Sicherungselement (112) in seiner ersten Stellung (S#1) relativ zur Aufnahme (102a-b) das erste Sicherungselement (110a-b) durch die innere Öffnung des mindestens einen Durchgangs (108a-b) in eine Verjüngung (206) des Membranstifts (202), welcher sich zumindest abschnittsweise in dem Aufnahmeraum (106) befindet, drückt.

7. Das Membranventil (300) oder Membransitzventil gemäß dem Anspruch 6 umfassend:
einen Kompressor (310), welcher zwischen dem distalen Ende (124) der Aufnahme (102a-b) und der Membran (200) angeordnet ist.

8. Das Membranventil (300) oder Membransitzventil gemäß dem vorigen Anspruch,
wobei ein freier Abstand (A) zwischen dem Kompressor (310), der Membran (200) und dem distalen Ende (124) der Aufnahme (102a-b) kleiner ist als ein Abstand (B) zwischen einem Boden (126) des Aufnahmeraums (106) und einem distalen Ende (226) des Membranstifts (202).

9. Das Membranventil (300) oder Membransitzventil gemäß einem der Ansprüche 6 bis 8, wobei der Membranstift (202) innerhalb des Aufnahmeraums (106) beweglich entlang der Stellachse (S) gelagert ist.

10. Das Membranventil (300) oder Membransitzventil gemäß dem Anspruch 4,
wobei die Haltegeometrie (130) des zweiten Sicherungselements (112) beim Übergang der Antriebsstange (304) in die Montageposition (M) auf einen zur Antriebsstange (304) feststehenden Anschlag (330) trifft.

11. Eine Verwendung des Membranventils (300) oder Membransitzventils gemäß einem der vorigen Ansprüche.

## Claims

1. A diaphragm valve (300) or a diaphragm seat valve comprising:
a drive (302);
a drive rod (304) connected to the drive (302), which drive rod comprises a connection device (100);
the connection device (100) comprising:
a receptacle (102a-b) having a distal opening (104) which releases a receiving space (106) for receiving a portion of a diaphragm pin (202) of a valve diaphragm (200), wherein at least one laterally arranged through-hole (108a-b) of the receptacle (102a-b) leads into the receiving space (106);
at least one first securing element (110a-b), which is movably arranged in the at least one lateral through-hole (108a-b) at least perpendicularly to a longitudinal axis of the connection device (100);
at least one second securing element (112), which is mounted on the receptacle (102a-b) so as to be movable along the longitudinal axis, wherein the second securing element (112), in a first position (S#1) relative to the receptacle (102a-b), presses the at least one first securing element (110a-b) into the receiving space (106) through an inner opening of the at least one through-hole (108a-b), and wherein the second securing element (112), in a second position (S#2) relative to the receptacle (102a-b), releases the first securing element (110a-b) for movement out of the receiving space (106); and
a spring element (114) which is supported on the receptacle (102a-b) and presses the second securing element (112) in the direction of the first position (S#1);
wherein the drive (302) transfers the drive rod (304) from at least one operating position (B#1, B#2) into a mounting position (M) in which the second securing element (112) is in the second position (S#2).

2. The diaphragm valve (300) or diaphragm seat valve according to claim 1, wherein the at least one through-hole (108a-b) tapers at least partly in the direction of the inner opening.

3. The diaphragm valve (300) or diaphragm seat valve according to any of the preceding claims, wherein the second securing element (112) comprises a limiting space which has a first diameter (D_216) in a first portion (216) in order to press, in the first position (S#1), the first securing element (110a-b) into the receiving space (106) through the inner opening of the at least one through-hole (108a-b), and wherein a second portion (118) of the limiting space has a second diameter (D_118) which is larger than the first diameter (D_116) in order to release, in the second position (S#2), the first securing element (110a-b) for movement out of the receiving space (106).

4. The diaphragm valve (300) or diaphragm seat valve according to any of the preceding claims, wherein the second securing element (112) comprises a retaining geometry (130) for reaching the second position (S#2).

5. The diaphragm valve (300) or diaphragm seat valve according to any of the preceding claims, wherein in the receiving space (106) there is at least one protective means to prevent the diaphragm pin (202) from falling out.

6. The diaphragm valve (300) or diaphragm seat valve according to any of the preceding claims, comprising:
the drive (302);
the drive rod (304) connected to the drive (302), which drive rod comprises the connection device (100);
a drive-side body (308);
a valve body (306);
the diaphragm (200), wherein a lateral portion (207) of the diaphragm (200) is clamped between the valve body (306) and the drive-side body (308), wherein the second securing element (112), in its first position (S#1) relative to the receptacle (102a-b), presses the first securing element (110a-b) through the inner opening of the at least one through-hole (108a-b) into a taper (206) of the diaphragm pin (202) which is located at least partly in the receiving space (106).

7. The diaphragm valve (300) or diaphragm seat valve according to claim 6, comprising:
a compressor (310) which is arranged between the distal end (124) of the receptacle (102a-b) and the diaphragm (200).

8. The diaphragm valve (300) or diaphragm seat valve according to the preceding claim,
wherein a free distance (A) between the compressor (310), the diaphragm (200), and the distal end (124) of the receptacle (102a-b) is smaller than a distance (B) between a bottom (126) of the receiving space (106) and a distal end (226) of the diaphragm pin (202).

9. The diaphragm valve (300) or diaphragm seat valve according to any of claims 6 to 8, wherein the diaphragm pin (202) is mounted inside the receiving space (106) so as to be movable along the actuating axis (S).

10. The diaphragm valve (300) or diaphragm seat valve according to claim 4,
wherein the retaining geometry (130) of the second securing element (112) meets a stop (330) which is stationary relative to the drive rod (304) during the transition of the drive rod (304) into the mounting position (M).

11. A use of the diaphragm valve (300) or diaphragm seat valve according to any of the preceding claims.

## Revendications

1. Vanne à membrane (300) ou vanne à siège à membrane comprenant:
un mécanisme d'entraînement (302);
une tige d'entraînement (304) qui est reliée au mécanisme d'entraînement (302) et qui comprend un dispositif de connexion (100);
ledit dispositif de connexion (100) comprenant:
un logement (102a-b) ayant une ouverture distale (104) qui forme un espace de réception (106) destiné à recevoir une section d'une tige de membrane (202) d'une membrane de vanne (200), dans lequel au moins un passage disposé latéralement (108a-b) du logement (102a-b) mène dans ledit espace de réception (106);
au moins un premier élément de fixation (110a-b) qui est disposé de manière mobile dans ledit au moins un passage latéral (108a-b), au moins verticalement à un axe longitudinal du dispositif de connexion (100);
au moins un deuxième élément de fixation (112) qui est logé de manière mobile sur le logement (102a-b) le long de l'axe longitudinal, dans lequel, dans une première position (S#1) par rapport au logement (102a-b), ledit deuxième élément de fixation (112) pousse ledit au moins un premier élément de fixation (110a-b) à travers une ouverture intérieure dudit au moins un passage (108a-b) dans ledit espace de réception (106), et dans lequel, dans une deuxième position (S#2) par rapport au logement (102a-b), ledit deuxième élément de fixation (112) libère le premier élément de fixation (110a-b) pour qu'il sorte de l'espace de réception (106); et
un élément formant ressort (114) qui prend appui sur le logement (102a-b) et pousse le deuxième élément de fixation (112) en direction de la première position (S#1);
dans lequel le mécanisme d'entraînement (302) fait passer la tige d'entraînement (304) d'au moins une position de fonctionnement (B#1, B#2) à une position de montage (M) dans laquelle le deuxième élément de fixation (112) se trouve dans la deuxième position (S#2).

2. Vanne à membrane (300) ou vanne à siège à membrane selon la revendication 1, dans laquelle ledit au moins un passage (108a-b) se rétrécit, au moins par sections, en direction de l'ouverture intérieure.

3. Vanne à membrane (300) ou vanne à siège à membrane selon l'une quelconque des revendications précédentes, dans laquelle le deuxième élément de fixation (112) comprend un espace de limitation qui, dans une première section (216), présente un premier diamètre (D_216) afin de pousser, dans la première position (S#1), le premier élément de fixation (110a-b) à travers l'ouverture intérieure dudit au moins un passage (108a-b) dans l'espace de réception (106), et dans laquelle une deuxième section (118) de l'espace de limitation présente un deuxième diamètre (D_118) qui est supérieur au premier diamètre (D_116) afin de libérer, dans la deuxième position (S#2), le premier élément de fixation (110a-b) pour qu'il sorte de l'espace de réception (106).

4. Vanne à membrane (300) ou vanne à siège à membrane selon l'une quelconque des revendications précédentes, dans laquelle le deuxième élément de fixation (112) comprend une géométrie de retenue (130) permettant d'atteindre la deuxième position (S#2).

5. Vanne à membrane (300) ou vanne à siège à membrane selon l'une quelconque des revendications précédentes, dans laquelle dans l'espace de réception (106) est au moins un dispositif empêchant la chute de la tige de membrane (202).

6. Vanne à membrane (300) ou vanne à siège à membrane selon l'une quelconque des revendications précédentes, comprenant:
le mécanisme d'entraînement (302);
la tige d'entraînement (304) qui est reliée au mécanisme d'entraînement (302) et qui comprend le dispositif de connexion (100);
un corps (308) côté mécanisme d'entraînement;
un corps de vanne (306);
la membrane (200), dans laquelle une section latérale (207) de la membrane (200) est fixée entre le corps de vanne (306) et le corps (308) côté mécanisme d'entraînement, dans laquelle, dans sa première position (S#1) par rapport au logement (102a-b), le deuxième élément de fixation (112), pousse le premier élément de fixation (110a-b) à travers l'ouverture intérieure dudit au moins un passage (108a-b) dans un rétrécissement (206) de la tige de membrane (202) qui est située au moins par sections dans l'espace de réception (106).

7. Vanne à membrane (300) ou vanne à siège à membrane selon la revendication 6, comprenant:
un compresseur (310) qui est disposé entre l'extrémité distale (124) du logement (102a-b) et la membrane (200).

8. Vanne à membrane (300) ou vanne à siège à membrane selon la revendication précédente,
dans laquelle une distance libre (A) entre le compresseur (310), la membrane (200) et l'extrémité distale (124) du logement (102a-b) est inférieure à une distance (B) entre un fond (126) de l'espace de réception (106) et une extrémité distale (226) de la tige de membrane (202).

9. Vanne à membrane (300) ou vanne à siège à membrane selon l'une quelconque des revendications 6 à 8, dans laquelle la tige de membrane (202) est montée de manière mobile le long de l'axe de réglage (S) à l'intérieur de l'espace de réception (106).

10. Vanne à membrane (300) ou vanne à siège à membrane selon la revendication 4,
dans laquelle la géométrie de retenue (130) du deuxième élément de fixation (112) vient s'engager contre une butée (330) fixe par rapport à la tige d'entraînement (304) lorsque la tige d'entraînement (304) passe en position de montage (M).

11. Utilisation d'une vanne à membrane (300) ou d'une vanne à siège à membrane selon l'une quelconque des revendications précédentes.
